# EUROPÄISCHE PATENTSCHRIFT

(11) **EP 0 765 724 B1**
(45) Veröffentlichungstag und Bekanntmachung des Hinweises auf die Patenterteilung: **01.10.2003**
(21) Anmeldenummer: 96113789.0
(22) Anmeldetag: 29.08.1996
(51) Int. Cl.: B29C 44/50, C08J 9/12

(54) **Verfahren zur Extrusion von Kunststoffschäumen aus thermoplastischen Polymeren**
Method for extruding thermoplastic polymeric foams
Procédé d'extrusion de mousses en polymère thermoplastique

(30) Priorität: 30.09.1995 DE 19536711
(43) Veröffentlichungstag der Anmeldung: 02.04.1997
(73) Patentinhaber: Berstorff GmbH, 30625 Hannover (DE)
(72) Erfinder: Kropp, Dirk, Dipl.-Ing., 52070 Aachen (DE)
(74) Vertreter: Meissner, Peter E., Dipl.-Ing.

(56) Entgegenhaltungen:
- DE-C- 4 104 418
- US-A- 3 988 404
- MICHAELI W. ET AL: "KOHLENDIOXID ALS VERARBEITUNGSHILFS- UND TREIBMITTEL BEIM SPRITZGIESSEN UND EXTRUDIEREN VON THERMOPLASTEN" GUMMI, FASERN, KUNSTSTOFFE INTERNATIONALE FACHZEITSCHRIFT FÜR DIE POLYMER-VERARBEITUNG, Bd. 49, Nr. 8, 1.August 1996, Seiten 652-661, XP000620541
- MICHAELI W. ET AL.: "MODIFIKATION VON BAUTEIL- UND VERARBEITUNGSEIGENSCHAFTEN VON KUNSTSTOFFEN DURCH FESTE UND GASFÖRMIGE ZUSCHLAGSTOFFE" GUMMI,FASERN,KUNSTSTOFFE INTERNATIONALE FACHZEITSCHRIFT FÜR DIE POLYMER-VERARBEITUNG, Bd. 49, Nr. 7, 1.Juli 1996, Seiten 568-576, XP002041705

## Beschreibung

Die Erfindung betrifft ein Verfahren zur Extrusion von Kunststoffschäumen aus thermoplastischen Polymeren.

Bei der Extrusion thermoplastischer Schäume können verschiedene Treibmittel zum Einsatz kommen. Es handelt sich hier zum einen um chemische Teibmittel, die als Pulver oder in einem Trägermaterial dem Granulat beigemischt werden. Beim Überschreiten einer bestimmten Temperatur zerfallen diese in kleinere, gasförmige Moleküle, zumeist CO₂ oder N₂. Dieses Gas liegt dann in der Polymerschmefze gelöst vor und diffundiert durch den Druckabfall am Werkzeugaustritt aus der Schmelze aus, wodurch es zur Blasenbildung kommt. Andererseits können aber auch physikalische Treibmittel verwendet werden, die sowohl flüssig als auch gasförmig vorliegen können. Während bei gasförmigen Treibmitteln, wie CO₂ oder N₂, der oben beschriebene Prozeß die Blasenbildung hervorruft, kommt bei den flüssigen Treibmitteln noch der Verdampfungseffekt hinzu.

Die früher verwendeten FCKW werden dabei zur Zeit durch alternative Treibmittel mit geringerem Gefährdungspontential für die Umwelt ersetzt. Derartige Treibmittel sind beispielsweise CO₂ oder N₂, die nach der Methode der Direktbegasung in den Extruder eingespritzt werden. Dabei wird zuerst das Granulat aufgeschmolzen. dann das Treibmittel eingedüst und vermischt und danach das Schmelze/Treibgasgemisch stark abgekühlt, um es anschließend durch ein Werkzeug auszuformen. Hier ist eine deutliche Absenkung der Temperatur notwendig, da durch die Diffusion des Treibgases in das Polymer die Viskosität des Schmelze/Treibgasgemisches stark herabgesetzt wird und die Schmelzefestigkeit zu gering wäre, um einen Schaum herzustellen. Es ist hier im übrigen erforderlich, einen sehr langen Einschneckenextruder mit einem Länge/Durchmesserverhältnis von ca. 40 einzusetzen. Alternativ kann die Anlage aus einer Kaskade mit einem Doppelschneckenextruder und einem sich anschließenden, kürzeren Einschneckenextruder bestehen. In dem Doppelschneckenxtruder wird das Polymer aufgeschmolzen und das Treibmittel eingespritzt und vermischt. Der nachfolgende Einschneckenextruder hat im allgemeinen einen größeren Zylinderdurchmesser, um einen besseren Wärmeaustausch und geringere Friktionsenergieerzeugung zu gewährleisten und dient der Kühlung der Schmelze auf die Ausformtemperatur.

Nachteilig bei der Extrusion thermoplastischer Schäume mittels Direktbegasung sind die erforderliche extreme Maschinenlänge, die damit verbundenen hohen Maschinenkosten und der große Energieverlust, der durch die Kühlung der Schmelze verursacht wird.

In der US 3 988 404 wird ein Verfahren zur Herstellung einer geschäumten thermoplastischen Isolierung für Femmeldekabel beschrieben. Dabei wird ein feinteiliges polymeres Einsatzmaterial eingesetzt, das vor der Zuführung zu einem Extruder unter Druck mit einem Treibgas beaufschlagt wird und einen Teil des Treibgases absorbiert. Als geeignete Treibgase werden neben Freon auch N₂ und CO₂ genannt. In dem Extruder werden die mit Treibgas beladenen Polymere aufgeschmolzen, in einer geeigneten Düse um das zu ummantelnde Kabel extrudiert und anschließend nach dem Aufschäumen durch Kühlung in einem Wasserbad formstabilisiert Im Hinblick auf den Prozeßablauf im Extruder werden jedoch keine näheren Angaben darüber gemacht, ob die Temperaturen im Aufschmelzbereich von den für die eingesetzten Polymere bisher üblichen Temperaturen abweichen und ob auf die bisher ebenfalls übliche Kühlung der Schmelze vor der Einleitung in die Extrusionsdüse verzichtet wird. Es werden lediglich in einigen Ausführungsbeispielen die Extrusionstemperaturen genannt.

Der Erfindung liegt die Aufgabe zugrunde, ein neues Verfahren zur Extrusion von thermoplastischen Schäumen mit alternativen Treibmitteln zu schaffen, bei dem eine Polymer-Treibmittel-Schmelze im Extruder bei deutlich verringerten Temperaturen verarbeitet werden kann und im Extruder nicht mehr gekühlt werden muß.

Erfindungsgemäß wird diese Aufgabe durch die Merkmale des Anspruchs 1 gelöst. Die weitere Ausgestaltung der Erfindung ist den Unteransprüchen zu entnehmen.

Das Granulat wird nach dem Vortrocknen in einer Begasungsanlage bei vorzugsweise erhöhter Temperatur und Druck einige Zeit mit CO₂ als Treibgas beladen und anschließend extrudiert. Durch Sorption des Treibgases wird bei amorphen Thermoplasten - insbesondere bei Polystyrol - die Glasübergangstemperatur und somit auch die Viskosität deutlich herabgesetzt. Die extreme Herabsetzung der Glasübergangstemperatur und der Viskosität ermöglicht die Herstellung thermoplastischer Schäume bei deutlich niedrigeren Temperaturen als der dem Stand der Technik entsprechenden Verarbeitungstemperaturen. Bei teilkristallienen Polymeren läßt sich durch die erfindungsgemäße Sorption des CO₂ eine Herabsetzung der Schmelztemperatur und somit gleichfalls eine Herabsetzung der Verarbeitungstemperatur erreichen. Insgesamt ergibt sich eine erhebliche Energieeinsparung, wobei die thermoplastischen Schäume auf Extrudern mit deutlich kürzeren Baulängen und vereinfachtem Aufbau hergestellt werden kön-nen.

Die erfindungsgemäße Begasung setzt voraus, daß das Gas in den jeweiligen Polymeren eine gute Löslichkeit aufweist. Die Löslichkeit von Gasen oder Flüssigkeiten in Polymeren ist eine Funktion des Druckes und der Temperatur - hoher Druck und niedrige Temperatur begünstigen die Sorption von Treibgasen. Besonders gute Löslichkeitsparameter werden erreicht, wenn das Gas in öden sogenannten überkritischen Zustand übergeht.

Hierbei eignet sich Kohlendioxid besonders gut, um Polymere in ihrer Viskosität zu erniedrigen, da dieses Gas im Vergleich zu Stickstoff eine 24-mal höhere Löslichkeit in Polymeren besitzt. Kohlendioxid geht bereits bei einer Temperatur von 31° C und einem Druck von etwas mehr als 73-76 bar in den überkritischen Zustand über.

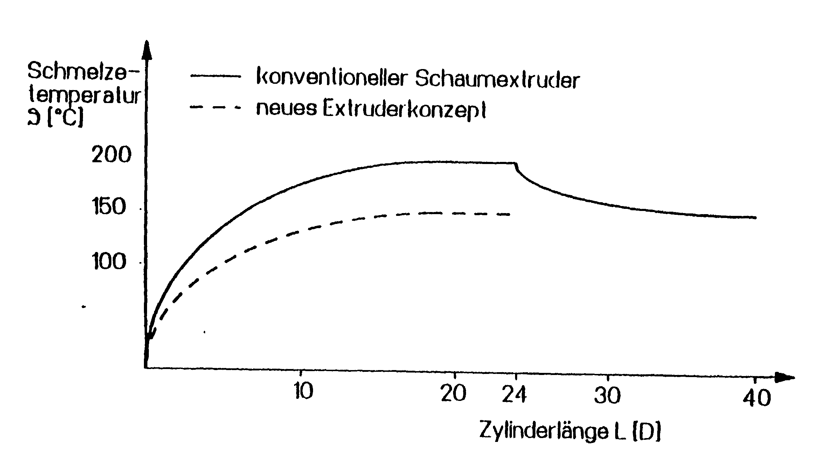

In der Zeichnung ist ein Vergleich zwischen dem Schmelztemperaturverlauf gemäß dem Stand der Technik und gemäß der Erfindung dargestellt. Nach dem erfindungsgemäßen Verfahren wird ein thermoplastisches Polymer, vorzugsweise ein amorpher Thermoplast in Form von Granulat oder Pulver in eine Begasungsanlage eingegeben und dort mit einer bestimmten Menge Treibmittel beladen. Bei dem Treibmittel handelt es sich um CO₂. Anschließend wird das Polymer in einem Extruder eingegeben, dort aufgeschmolzen und in Richtung eines Extrusionswerkzeuges gefördert, die extrudierte, mit dem Treibmittel beladene Schmelze wird durch ein Werkzeug ausgeformt und der extrudierte Schaum von Nachfolgeeinrichtungen gekühlt, kalibriert und abgezogen.

Die durch die Vorbegasung erreichte Erniedrigung der Glasübergangstemperatur bzw. der Schmelztemperatur und somit auch der Schmelzeviskosität ist so hoch, daß die Extruder- und Werkzeugtemperaturen deutlich niedriger liegen, als die dem Stand der Technik entsprechenden Verarbeitungstemperaturen. Die erfindungsgemäß nicht mehr erforderliche Kühlung des Polymer-Treibmittelgemisches erlaubt den Einsatz eins handelsüblichen Extruders kürzerer Bauart. Zusätzlich ergeben sich sehr hohe Energieeinsparungen. Der alternative Einsatz einer kostenintensiven Tandemextrusionslinie ist gleichfalls nicht mehr erforderlich.

Die Zeichnung zeigt einen Vergleich zwischen dem Schmelztemperaturverlauf bei einem konventionellen Extruder und bei einem erfindungsgemäß stark verkürztem Extruder. Es wird deutlich, daß durch die erfindungsgemäße Vorbegasung des Polymers nicht nur ein kürzerer Extruder eingesetzt werden kann, sondern daß auch erhebliche Energie eingespart wird. Im übrigen ist zu berücksichtigen, daß die Begasungsanlage für den Transport und die Druckerhöhung des Treibgases deutlich weniger Energie benötigt, als ein längerer Extruder bzw. eine Tandemextrusionslinie zum Heizen der Zylinderzonen.

Bei der Durchführung des Verfahrens wurde beispielsweise folgendermaßen vorgegangen:

Als PolymerPolymer/Treibgassystem wurde Polystyrol/CO₂ ausgewählt. Dabei wurde ein Polystyrol vom Typ PS 158 K (BASF) bei 60 bar über einen Zeitraum von 24 Stunden mit CO₂ begast. das mit Treibgas beladene Polymer wurde dem Begasungsbehälter entnommen und direkt anschließend in einen 60 mm Extruder mit einem L/D-Verhältnis von 27 gefüllt, wo es bei 148° C extrudiert wurde. Die Schmelze wurde durch ein Werkzeug ausgeformt und der extrudierte Schaum von Nachfolgeeinrichtungen gekühlt, kalibriert und abgezogen. Der hergestellt Schaum hatte eine Dichte von ca. 50 kg/m³.

## Patentansprüche

1. Verfahren zur Extrusion von Kunststoffschäumen aus einem thermoplastischen Polymer, bei dem es sich um ein amorphes oder teilkristallines Polymer handelt, das als Granulat oder Pulver einer Begasungsanlage zugeführt, dort bei einer Temperatur unterhalb der Glasübergangstemperatur bzw. der Schmelztemperatur unter Druck mit CO₂ als Treibgas durch Sorption beladen und anschließend extrudiert wird, wobei die Extrusion unter Ausnutzung der durch die Sorption des Treibgases im Vergleich zur Extrusion des unbeladenen Polymers verringerten Glasübergangstemperatur bzw. Schmelztemperatur und der verringerten Viskosität ohne Kühlung des Polymer - Treibmittel - Gemisches mittels eines gegenüber der üblichen Baulänge verkürzten Extruders mit einem L/D Verhältnis bis zu 27 und bei einer Temperatur bis etwa 150°C erfolgt.

2. Verfahren nach Anspruch 1, **dadurch gekennzeichnet, dass** das thermoplastische Polymer in der Begasungsanlage bei einem Druck von 1 bar bis 250 bar, vorzugsweise von etwa 60 bar mit CO₂ beladen wird.

3. Verfahren nach Anspruch 1 und gegebenenfalls Anspruch 2, **dadurch gekennzeichnet, dass** als thermoplastisches Polymer ein amorpher Thermoplast eingesetzt wird.

4. Verfahren nach Anspruch 1 und gegebenenfalls einem oder mehreren der weiteren Ansprüche, **dadurch gekennzeichnet, dass** als thermoplastisches Polymer ein Polystyrol eingesetzt wird.

5. Verfahren nach Anspruch 1 und gegebenenfalls einem oder mehreren der weiteren Ansprüche, **dadurch gekennzeichnet, dass** das Polymer bei erhöhter Temperatur vorgetrocknet und direkt im Anschluß an die Vortrocknung Mit CO₂ begast wird, derart, dass die Beladung mit CO₂ beschleunigt wird.

6. Verfahren nach Anspruch 1 und gegebenenfalls einem oder mehreren der weiteren Ansprüche, **dadurch gekennzeichnet, dass** das thermoplastische Polymer in einer Vortrocknungsanlage bei erhöhter Temperatur mit CO₂ getrocknet und dabei gleichzeitig begast wird.

## Claims

1. Method of extruding plastics foams from a thermoplastic polymer, which is an amorphous or partially crystalline polymer and can be fed in granular or powdered form to a gas absorption plant, there charged under pressure at a temperature below the glass transition temperature or melting temperature with CO₂ as a propellant by sorption and then extruded, wherein extrusion takes place exploiting the glass transition temperature or melting temperature which is reduced by the sorption of the propellant compared to the extrusion of uncharged polymer and the reduced viscosity without cooling of the polymer/propellant mixture by means of an extruder which is shorter than the conventional structural length with an LID ratio of up to 27 and at a temperature of up to 150°C.

2. Method according to claim 1, **characterised in that** the thermoplastic polymer is charged with CO₂ in the gas absorption plant at a pressure of 1 bar to 250 bar, preferably of about 60 bar.

3. Method according to claim 1 and optionally claim 2, **characterised in that** as a thermoplastic polymer an amorphous thermoplast is used.

4. Method according to claim 1 and optionally one or more of the further claims, **characterised in that** as a thermoplastic polymer a polystyrene is used.

5. Method according to claim 1 and optionally one or more of the further claims, **characterised in that** the polymer is pre-dried at an increased temperature and is subjected to gas absorption with CO₂ directly following pre-drying, in such a manner that charging with CO₂ is accelerated.

6. Method according to claim 1 and optionally one or more of the further claims, **characterised in that** the thermoplastic polymer is dried with CO₂ at an increased temperature in a pre-drying plant and is simultaneously subjected to gas absorption.

## Revendications

1. Procédé pour l'extrusion de mousses en matière synthétique à partir d'un polymère thermoplastique, pour lequel il s'agit d'un polymère amorphe ou partiellement cristallin, qui est amené comme granulat ou poudre à une installation d'absorption de gaz, y est chargé là pour une température au-dessous de la température de transition vitreuse ou de la température de fusion sous pression avec CO₂ comme gaz moussant par sorption et, ensuite, est extrudé, l'extrusion étant effectuée en exploitant la température de fusion ou la température de transition vitreuse diminuée par la sorption du gaz moussant par rapport à l'extrusion du polymère non chargé et de la viscosité diminuée sans refroidissement du mélange polymère/agent moussant au moyen d'une extrudeuse raccourcie par rapport à la longueur usuelle avec un rapport L/D jusqu'à 27 et pour une température jusqu'à environ 150°C.

2. Procédé selon la revendication 1,
**caractérisé en ce que** le polymère thermoplastique est chargé dans l'installation d'absorption de gaz à une pression de 1 bar à 250 bars, avantageusement d'environ 60 bars, avec CO₂.

3. Procédé selon la revendication 1 et, le cas échéant, la revendication 2,
**caractérisé en ce qu'**un polymère thermoplastique amorphe est utilisé comme polymère thermoplastique.

4. Procédé selon la revendication 1 et, le cas échéant, une ou plusieurs des autres revendications,
**caractérisé en ce qu'**un polystyrol est utilisé comme polymère thermoplastique.

5. Procédé selon la revendication 1 et, le cas échéant, une ou plusieurs des autres revendications,
**caractérisé en ce que** le polymère est séché préalablement à une température élevée et est soumis à une absorption de gaz CO₂ directement après le séchage préalable, de sorte que le chargement en CO₂ est accéléré.

6. Procédé selon la revendication 1 et, le cas échéant, une ou plusieurs des autres revendications,
**caractérisé en ce que** le polymère thermoplastique est séché dans une installation de séchage préalable à une température élevée avec CO₂ et est de plus soumis simultanément à une absorption de gaz.
